# EUROPÄISCHE PATENTANMELDUNG

(11) **EP 1 303 021 A2**
(43) Veröffentlichungstag der Anmeldung: **16.04.2003**
(21) Anmeldenummer: 02020771.8
(22) Anmeldetag: 16.09.2002
(51) Int. Cl.: H02H 7/085

(54) **Elektronisch gesteuerter, drehzahlvariabler Drehstrommotor**

(30) Priorität: 17.09.2001 DE 10145781
(71) Anmelder: Hanning Elektro-Werke GmbH & Co. KG, 33813 Oerlinghausen (DE)
(72) Erfinder: Henke, Thomas, Dipl.-Ing., 33829 Borgholzhausen (DE)
(74) Vertreter: TER MEER STEINMEISTER & PARTNER GbR

(57) **Zusammenfassung**

Der elektronisch gesteuerte, drehzahlvariable Drehstrommotor in Stemschaltung der Spulenwicklungen, umfaßt Thermoschalter (30,32,34) zum Schutz der Spulenwicklungen (22,24,26) gegen Überhitzung. Die Thermoschalter (30,32,34) sind im Hauptstrang zwischen den Spulenwicklungen (22,24,26) und dem Stempunkt (28) angeordnet.

## Beschreibung

Die Erfindung betrifft einen elektronisch gesteuerten, drehzahlvariablen Drehstrommotor in Sternschaltung der Spulenwicklungen, mit Thermoschaltern zum Schutz der Spulenwicklungen gegen Übertemperatur.

Bürstenlose Drehstrommotoren haben sich als drehzahlvariable elektrische Antriebe für Anwendungen aller Art mit elektronischer Steuerung, insbesondere Frequenzumrichtern, bewährt. Dies gilt gleichermaßen für Asynchron- wie Synchronmotoren. Die Motorspulen werden aufgrund der günstigen Spannungsverteilung vorzugsweise in Sternschaltung betrieben.

Die elektronische Steuerung wandelt die vom Netzanschluß oder anderen Quellen eingespeiste Energie in ein Drehfeld veränderbarer Spannung und Frequenz um. Die Spannung wird variiert über eine Pulsweitenmodulation, d. h. dem Motor werden getaktete Spannungsimpulse mit variablem Puls-Pausen-Verhältnis zugeführt. Die Taktfrequenz wird vorzugsweise so gewählt, daß einerseits keine Geräuschentwicklung auftritt und andererseits die elektrischen Verluste in den Bauelementen gering bleiben.

Bei einer Blockierung des Motors oder auch bei einem Phasenausfall kann es zu einer Überhitzung der Spulen kommen. Daher sind thermische Auslöseelemente, sogenannte Thermoschalter vorgesehen, die in jeder Spulenwicklung des Motors gesondert die Temperatur überwachen. Die Thermoschalter sind üblicherweise als Öffnerkontakte ausgeführt und in Reihe geschaltet. Die Anschlußenden der Öffnerkette sind aus dem Motorpaket nach außen geführt. Die Auswertung geschieht durch externe Schaltelemente, bei elektronisch gesteuerten Antrieben durch die elektronische Steuerung.

Die separate Verdrahtung und Auswertung der Thermoschalter erfordert zusätzlichen Herstellungs- und Kostenaufwand, der naturgemäß unerwünscht ist.

Die separate Verdrahtung und Auswertung der Thermoschalter kann entfallen, wenn die Schalter direkt in Reihe mit der zugehörigen Spulenwicklung geschaltet werden.

Dabei muß der Thermoschalter für den Strangstrom des Motors ausgelegt sein. Thermoschalter dieser Art werden dabei aus wicklungstechnischen Gründen in die Zuleitung zwischen der Steuerung und den einzelnen Spulenwicklungen geschaltet.

Bei einem Motor mit elektronischer Steuerung, insbesondere einem Frequenzumrichter, kann die Steuerung das Ansprechen eines Thermoschalters erkennen und daraufhin den weiteren Motorbetrieb sperren. Dies kann geschehen durch eine Messung der Phasenströme oder durch Überwachung der Ströme innerhalb der Leistungselektronik.

Das Schalten der Motorströme in der Zuleitung zwischen der elektronischen Steuerung und den Spulenwicklungen ist jedoch bei getaktetem Betrieb äußerst problematisch. Durch das Öffnen eines Thermoschalterkontakts kann es aufgrund von transienten Überspannungen zu einer Zerstörung der Steuerungselektronik kommen.

Zur Unterdrückung dieser Überspannungen und zum Schutz der Elektronik sind Filterkomponenten in Form induktiver und kapazitiver Bauteile an den Ausgängen der Steuerelektronik verwendet worden, die jedoch einen erhöhten Kostenaufwand und Platzbedarf bedeuten.

Der Erfindung liegt daher die Aufgabe zugrunde, einen Motor der obigen Art mit einer weiter vereinfachten Thermoschalter-Anordnung zu schaffen.

Diese Aufgabe wird erfindungsgemäß dadurch gelöst, daß die Thermoschalter im Hauptstrang zwischen den Wicklungen und dem Sternpunkt angeordnet sind.

Bei dieser Anordnung liegen die Thermoschalter, von der externen Steuerung aus gesehen, elektrisch hinter den Spulenwicklungen. Bei dieser Anordnung wirken die Induktivitäten der Motorwicklung zusammen mit parasitären Kapazitäten des Motorpakets als Filterelemente zum Schutz gegen die transienten Störungen, die durch Öffnen der Thermoschalter hervorgerufen werden.

Da die genannten Induktivitäten der Motorwicklung und die parasitären Kapazitäten des Motorpakets ohnehin vorhanden sind, ist es nicht notwendig, zusätzliche Filterelemente zum Schutz der Steuerung vorzusehen.

Die erfindungsgemäße elektronische Steuerung umfaßt vorzugsweise einen Frequenzumrichter, der Spannungsimpulse mit variablem Puls-Pausen-Verhältnis liefert.

Im folgenden wird ein bevorzugtes Ausführungsbeispiel der Erfindung anhand der beigefügten Zeichnung näher erläutert.
- Fig. 1: ist eine schematische Darstellung eines Drehstrommotors mit elektronischer Steuerung;
- Fig. 2: ist ein Schaltbild einer herkömmlichen Thermoschalteranordnung eines Drehstrommotors;
- Fig. 3: ist ein entsprechendes Schaltbild einer erfindungsgemäßen Thermoschalteranordnung.

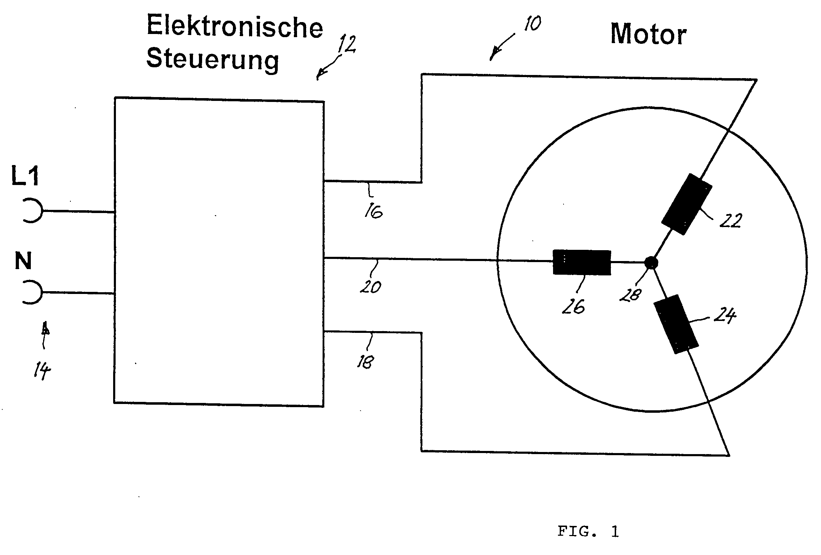

In Fig. 1 ist ein Drehstrommotor mit 10 und dessen elektronische Steuerung mit 12 bezeichnet. Die elektronische Steuerung nimmt einen Einphasen-Wechselstrom aus einem Netz 14 auf. Die elektronische Steuerung 12 wandelt die vom Netzanschluß eingespeiste Energie in ein Drehfeld veränderbarer Spannung und Frequenz um. Es handelt sich bei dem dargestellten Beispiel also um einen Frequenzumrichter. Die Steuerung erfolgt über eine Pulsweitenmodulation, d. h. dem Motor werden getaktete Spannungsimpulse mit variablem Puls-Pausen-Verhältnis zugeführt und über drei Leitungen 16,18,20 Spulenwicklungen 22,24,26 des Drehstrommotors abgegeben. Die drei Spulenwicklungen 22,24,26 sind in einem Sternpunkt 28 zusammengeschaltet.

Bei einer derartigen Schaltungsanordnung kann es zu einer Überhitzung der Spulenwicklungen kommen, wenn beispielsweise der Motor blockiert wird oder eine oder zwei Phasen ausfallen. Es ist daher vielfach üblich, den drei Spulenwicklungen 22,24,26 Thermoschalter zuzuordnen, die oberhalb vorgegebener Temperaturen öffnen und in geeigneter Weise ein Abschalten des Motors bewirken, wie es eingangs erläutert wurde.

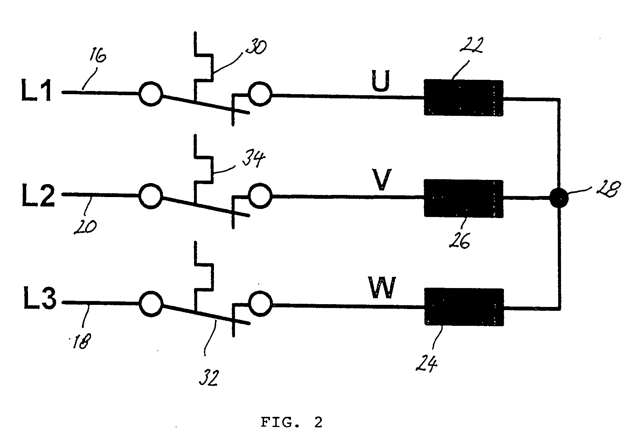

Abgesehen von der Möglichkeit, die Thermoschalter in einer gesonderten, in Fig. 1 nicht dargestellten Schaltung zu verbinden, ist es auch bekannt, drei Thermoschalter direkt in Reihe mit den drei Spulenwicklungen zwischen der Steuerung und den Spulenwicklungen anzuordnen, wie es in Fig. 2 gezeigt ist. Gemäß Fig. 2 sind drei Thermoschalter 30,32,34 vorgesehen, die in geeigneter, nicht gezeigter Weise Fühlerelemente zur laufenden Überwachung der Temperatur der drei Spulenwicklungen 22,24,26 aufweisen.

Wenn einer der drei Thermoschalter 30,32,34 öffnet, weil in der entsprechenden Spulenwicklung eine überhöhte Temperatur festgestellt worden ist, können aufgrund der von der Steuerung abgegebenen getakteten Spannungsimpulse transiente Überspannungen entstehen, die zur Zerstörung oder Beschädigung der Steuerelektronik führen können. Diese Überspannungen können neutralisiert werden durch Filterkomponenten in der Form induktiver und kapazitiver Bauteile, die an den Ausgängen der Steuerung zwischen dieser und den drei Thermoschaltern 30,32,34 vorgesehen werden. Diese Filterelemente bedeuten jedoch einen zusätzlichen konstruktiven Aufwand, der das entstehende Produkt insgesamt verteuert.

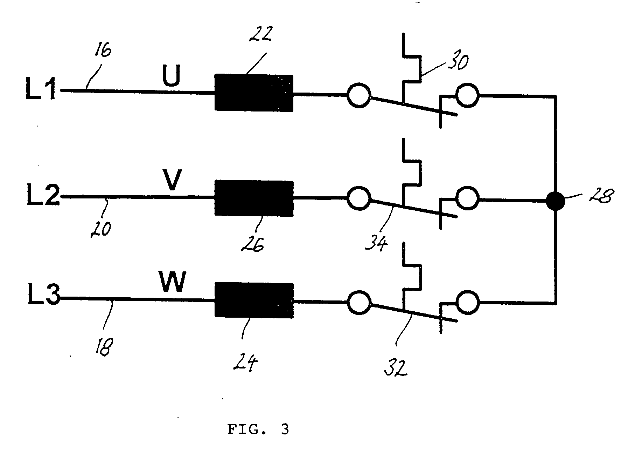

Erfindungsgemäß sind daher gemäß Fig. 3 die drei Thermoschalter 30,32,34 zwischen den Spulenwicklungen 22,24,26 und dem Sternpunkt 28 vorgesehen. Bei dieser Anordnung wirken die Induktivitäten der Motorwicklung zusammen mit parasitären Kapazitäten des Motorpakets als Filterelemente zum Schutz gegen die transienten Überspannungen, die durch die Thermoschalter hervorgerufen werden. Die Wirksamkeit dieser Maßnahme ist durch Versuche bestätigt worden.

## Patentansprüche

1. Elektronisch gesteuerter, drehzahlvariabler Drehstrommotor in Sternschaltung (28) der Spulenwicklungen, mit Thermoschaltern (30,32,34) zum Schutz der Spulenwicklungen (22,24,26) gegen Überhitzung, **dadurch gekennzeichnet, daß** die Thermoschalter (30,32,34) im Hauptstrang zwischen den Spulenwicklungen (22,24,26) und dem Sternpunkt (28) angeordnet sind.

2. Drehstrommotor nach Anspruch 1, **dadurch gekennzeichnet, daß** die elektronische Steuerung (12) ein Frequenzumrichter ist.
